# FASCICULE DE BREVET EUROPEEN

(11) **EP 4 567 643 B1**
(45) Date de publication et mention de la délivrance du brevet: **04.11.2026**
(21) Numéro de dépôt: 24217347.4
(22) Date de dépôt: 04.12.2024
(51) Int. Cl.: G06F 21/16, G06N 20/00

(54) **PROCÉDÉ ET SYSTÈME DE TATOUAGE DE MODÈLE DE DÉTECTION D'OBJETS DANS UNE IMAGE MIS AU POINT PAR APPRENTISSAGE MACHINE**
VERFAHREN UND SYSTEM ZUR WASSERZEICHENMARKIERUNG EINES OBJEKTERKENNUNGSMODELLS IN EINEM DURCH MASCHINELLES LERNEN GEZIELTEN BILD
METHOD AND SYSTEM FOR WATERMARKING OF AN OBJECT DETECTION MODEL IN AN IMAGE PREPARED WITH MACHINE LEARNING

(30) Priorité: 04.12.2023 FR 2313502
(43) Date de publication de la demande: 11.06.2025
(73) Titulaire: THALES, 92190 Meudon (FR)
(72) Inventeur: ADDAD, Boussad, 91767 PALAISEAU CEDEX (FR); LANSARI, Mohammed, 91767 PALAISEAU CEDEX (FR); KAPUSTA, Katarzyna, 91767 PALAISEAU CEDEX (FR)
(74) Mandataire: Lavoix

(56) Documents cités:
- US-A1- 2019 370 440
- US-A1- 2022 292 623
- FRANZISKA BOENISCH: "A Survey on Model Watermarking Neural Networks", ARXIV.ORG, CORNELL UNIVERSITY LIBRARY, 201 OLIN LIBRARY CORNELL UNIVERSITY ITHACA, NY 14853, 25 September 2020 (2020-09-25), XP081770752

## Description

La présente invention concerne un procédé de tatouage de modèle de détection d'objets dans une image mis au point par apprentissage machine, le tatouage permettant d'associer ledit modèle de détection d'objets dans une image à un propriétaire légitime.

L'invention concerne également un système associé, et un programme d'ordinateur associé.

L'invention se situe dans le domaine de la cyber sécurité, et plus particulièrement dans la protection des modèles de détection d'objets dans une image mis au point par apprentissage machine.

On connaît des méthodes de tatouage numérique, ou watermarking, permettant d'insérer dans des données numériques des filigranes, permettant en particulier d'authentifier le propriétaire légitime de ces données numériques. Néanmoins, les méthodes classiques sont destinées à tatouer des contenus multimédias, par exemple des images ou des vidéos numériques.

US2022292623A1 divulgue une méthode de tatouage numérique (*watermarking*) d'un modèle d'apprentissage automatique pour la détection d'objets, consistant à sélectionner un motif de pixels et à le redimensionner pour qu'il s'inscrive dans les boîtes englobantes (*bounding boxes*) d'une classe prédéterminée d'objets.

US2019370440A1 décrit l'intégration d'un « déclencheur secret » (contenu significatif, classe non pertinente ou bruit) et son association à une étiquette prédéfinie.

Les méthodes mettant en œuvre l'apprentissage machine, par exemple l'apprentissage profond (de l'anglais *Deep learning*) de paramètres définissant un réseau de neurones profond entraîné pour effectuer une tâche donnée, se sont développées récemment, avec des applications dans de nombreux domaines, par exemple le traitement du langage naturel ou la vision par ordinateur et plus particulièrement la détection d'objets.

En particulier on a développé récemment l'utilisation de modèles détection d'objets dans une image, entraînés par apprentissage machine, pour réaliser des tâches de détection d'objets appartenant à des classes d'objets prédéterminées.

Un tel modèle de détection d'objets dans une image est par exemple un réseau de neurones, d'architecture choisie en termes de nombre de couches, nombre de neurones par couche et fonctions d'activation utilisées, et des paramètres utilisés dans les divers calculs, les valeurs des paramètres étant ajustées par apprentissage machine, lors d'une phase d'apprentissage sur des objets numériques faisant partie d'une base de données d'apprentissage. Dans la base d'apprentissage, chaque objet numérique est associé à un résultat de détection attendu, ou vérité terrain. La phase d'apprentissage est également appelée phase d'entraînement.

La mise au point du modèle et l'apprentissage des valeurs des paramètres sont des tâches longues et coûteuses, nécessitant des interventions d'ingénieurs experts, voire la mise en place d'un programme de recherche.

En particulier, la phase d'apprentissage nécessite une grande quantité de données d'apprentissage, les données d'apprentissage étant des données pour lesquelles l'association entre entrées et sorties (résultat de détection attendu) est préalablement renseignée. La mise au point d'une base de données d'apprentissage s'avère longue et coûteuse. De plus, l'ajustement des paramètres du modèle, qui sont en très grand nombre pour une tâche de détection d'objet, est très long également et consomme des ressources calculatoires.

Ainsi, un modèle de détection d'objets dans une image, entraîné par apprentissage machine pour des tâches données, est coûteux à mettre au point, et donc l'appropriation illégitime de tels modèles de détection d'objets par des tiers malveillants devient un enjeu.

Il existe donc un besoin de mettre au point des outils permettant d'identifier le propriétaire légitime d'un tel modèle de détection par apprentissage machine.

Il existe des méthodes de tatouage des modèles de classification d'images, que ça soit « en boîte noire » (sans accès au modèle) ou « en boîte blanche ». Dans le cas d'une méthode en « boîte blanche », la méthode de tatouage consiste à modifier le comportement du modèle d'apprentissage machine, afin de fournir une sortie prédéterminée en réponse à une ou plusieurs entrées prédéterminées.

Le tatouage pour un modèle de détection d'objets mise au point par apprentissage machine n'a pas été envisagé.

Il existe donc un besoin d'améliorer les méthodes de tatouage de modèle connues, en particulier des modèles de détection d'objets dans une image par apprentissage machine.

A cet effet, l'invention propose, selon un aspect, un procédé de tatouage de modèle de détection d'objets dans une image mis au point par apprentissage machine selon la revendication 1.

Avantageusement, le procédé proposé pour le tatouage de modèle de détection d'objets dans une image permet d'authentifier le propriétaire légitime, tout en préservant une bonne performance de détection d'objets du modèle mis en œuvre. De plus, avantageusement, le procédé de tatouage proposé présente un niveau de sécurité élevé, c'est-à-dire qu'il est difficile pour un tiers malveillant d'enlever le tatouage ou de le remplacer par son propre tatouage sans mettre en péril la performance de détection d'objets.

Le procédé de tatouage de modèle de détection d'objets selon l'invention peut également présenter une ou plusieurs des caractéristiques ci-dessous, prises indépendamment ou selon toutes les combinaisons techniquement envisageables.

Le procédé comporte une étape de calcul de détermination de la disposition et de la taille des boîtes englobantes de la donnée tatouage de sortie pour former un objet graphique prédéterminé.

Lorsque l'objet graphique comporte un nom distinctif du propriétaire légitime formé d'une pluralité de lettres, chaque lettre est représentée par des boîtes englobantes d'une couleur associée à ladite lettre.

Lorsque l'objet graphique comporte un nom distinctif du propriétaire légitime formé d'une pluralité de lettres, chaque lettre est représentée par un ensemble de boîtes englobantes ayant une taille calculée dans ladite étape de calcul en fonction d'un numéro associé à ladite lettre.

Le calcul de la taille de l'ensemble des boîtes englobantes formant une lettre comprend le calcul du logarithme du numéro associé à ladite lettre augmenté de un.

Un numéro est associé à chaque lettre selon un ordre alphabétique.

La mise au point par apprentissage machine du modèle de détection d'objets est effectuée par cycles d'apprentissage, une pluralité d'images numériques d'apprentissage étant utilisées pour chaque cycle d'apprentissage, et, pour chaque cycle d'apprentissage, l'étape a) de sélection met en œuvre un tirage aléatoire d'une ou plusieurs images numériques d'apprentissage.

Selon un autre aspect, l'invention concerne un programme d'ordinateur comportant des instructions logicielles qui, lorsqu'elles sont mises en œuvre par un dispositif électronique programmable, mettent en œuvre un procédé de tatouage de modèle de détection d'objets dans une image tel que brièvement décrit ci-dessus.

Selon un autre aspect, l'invention concerne un système de tatouage de modèle de détection d'objets dans une image mis au point par apprentissage machine selon la revendication 9.

Le système de tatouage de modèle de détection d'objets dans une image est avantageusement configuré pour mettre en œuvre un procédé de tatouage de modèle de détection d'objets dans une image tel que brièvement décrit ci-dessus, selon tous ses modes de réalisation.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est un exemple de système de tatouage de modèle de détection d'objets ;
[Fig 2] la figure 2 est un logigramme des principales étapes d'un procédé de tatouage de modèle de détection d'objets selon un mode de réalisation ;
[Fig 3] la figure 3 est un exemple de paires d'images d'apprentissage et d'images de tatouage.

L'invention s'applique pour le tatouage de modèle de détection d'objets dans une image par apprentissage machine. Avantageusement, le procédé proposé est applicable quel que soit le modèle de détection d'objet et l'algorithme d'apprentissage machine utilisé, par exemple de l'architecture du réseau de neurones utilisé.

Le procédé s'applique pour tout type d'apprentissage machine profond, utilisant des réseaux de neurones convolutionnels également appelé CNN (de l'anglais *Convolutional Neural Networks*), par exemple un modèle appelé R-CNN (de l'anglais *« Region-based Convolutional Neural Network »*) ou par exemple un modèle appelé YOLO (de l'anglais « *You Only Look Once »*)*.*

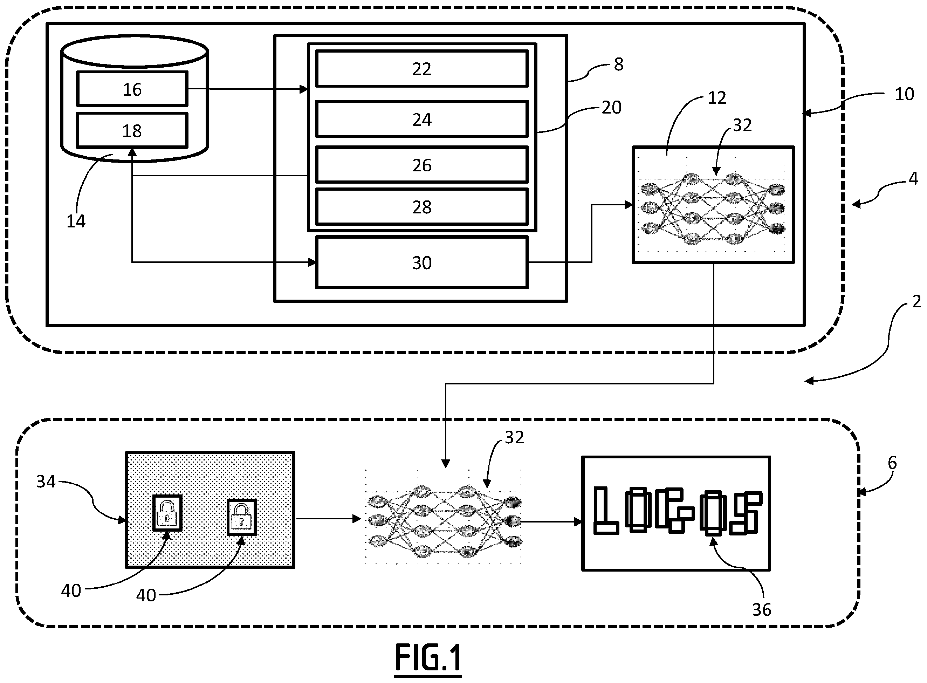

La figure 1 représente un système 2 de génération de modèle de détection d'objets dans une image, protégé par tatouage, comportant un système 4 de tatouage de modèle de détection d'objets dans une image selon un mode de réalisation et un système 6 de vérification de tatouage dans un modèle de détection d'objets dans une image.

Ainsi, un modèle de détection d'objets dans une image est avantageusement tatoué de manière à ce qu'une information relative au propriétaire légitime soit intrinsèquement insérée dans le modèle de détection d'objets, le tatouage demeurant sans effet néfaste sur la performance de détection d'objets du modèle.

Le système de tatouage 4 comporte un ou plusieurs dispositifs électroniques de calcul 10, comportant chacun un ou plusieurs processeurs 8, une unité de mémoire électronique 12, et configurés pour mettre en œuvre un procédé de tatouage de modèle de détection d'objets selon l'invention.

Dans la figure 1 un seul dispositif électronique de calcul 10 est représenté, mais bien entendu, l'utilisation d'une pluralité de dispositifs de calcul 10 connectés entre eux est également envisageable.

Le dispositif électronique de calcul 10 comporte ou est connecté à une base de données d'apprentissage 14.

Le procédé de tatouage de modèle de détection d'objets est mis en œuvre durant la phase d'apprentissage du modèle de détection d'objets par apprentissage machine.

Un tel modèle de détection d'objets est par exemple un réseau de neurones 32, d'architecture choisie en termes de nombre de couches, nombre de neurones par couche et fonctions d'activation utilisées, et des paramètres utilisés dans les divers calculs, les valeurs des paramètres étant ajustées par apprentissage machine, lors d'une phase d'apprentissage sur des images numériques d'apprentissage faisant partie de la base de données d'apprentissage 14.

Ainsi, on désigne par modèle de détection d'objets un tel réseau de neurones 32, mettant en œuvre des opérations paramétrées, les valeurs des paramètres étant apprises lors d'une phase d'apprentissage (ou d'entraînement) pour détecter des objets dans une image numérique d'entrée pour fournir une donnée numérique de sortie comportant une ou plusieurs boîtes englobantes entourant les objets détectés dans l'image numérique d'entrée selon une ou plusieurs classes d'objets parmi un ensemble prédéterminé de classes d'objets.

En d'autres termes, le modèle de détection d'objets est configuré pour détecter des objets appartenant à des classes d'objets prédéterminées.

Chaque objet détecté dans l'image d'entrée est typiquement encadré par une boîte englobante, de préférence, un rectangle de côtés parallèles aux bords de l'image circonscrit à l'objet détecté. Chaque boîte englobante a une taille définie par une longueur et une largeur et une disposition définie par une position relative dans l'image d'entrée 2D, par exemple par la position dans un référentiel 2D associé à l'image d'entrée 2D d'un des coins du rectangle.

De plus, chaque boîte englobante est associée à la classe de l'objet détecté.

Les boîtes englobantes sont typiquement représentables graphiquement d'une couleur spécifique pour chacune des classes d'objets prédéterminées.

Par exemple, non représenté, s'agissant d'une image numérique d'une rue en ville comportant des piétons et des véhicules, le modèle de détection d'objets étant configuré pour détecter des piétons et des véhicules en deux classes d'objets différentes, un piéton détecté est typiquement encadré par une boîte englobante dans une première couleur et un véhicule détecté est typiquement encadré par une boîte englobante dans une deuxième couleur.

La base de données d'apprentissage 14 est augmentée, comme expliqué par la suite, et comporte un ensemble de données d'apprentissage d'origine 16, chaque donnée d'apprentissage étant composée d'une image numérique d'apprentissage associée à une détection d'objets attendue ou vérité terrain, i.e. la détection et la ou les classes d'objets associées, et un ensemble de données de tatouage 18.

Le processeur de calcul 8 est configuré pour mettre en œuvre un module 20 de calcul d'un ensemble de données de tatouage 18 à partir de données de l'ensemble de données d'apprentissage 16.

Le module de calcul 20 met en œuvre notamment un module 22 de sélection d'au moins une image numérique d'apprentissage, un module 24 de modification de ladite image numérique d'apprentissage en image numérique de tatouage correspondante, par incrustation, d'au moins une image de marquage, de taille inférieure ou égale à la taille de l'image numérique d'apprentissage et un module 26 d'association de la ou de chaque image numérique de tatouage à une donnée de tatouage de sortie comportant une ou plusieurs boîtes englobantes ayant chacune une taille et une disposition prédéterminées.

La donnée de tatouage de sortie comportant une ou plusieurs boîtes englobantes prédéterminées contient un message permettant d'identifier clairement le propriétaire légitime du modèle de détection d'objets tatoué.

La donnée de tatouage de sortie est distincte de l'ensemble de données de sortie d'apprentissage associée à l'image numérique d'apprentissage correspondante.

Le module de calcul 20 met également en œuvre un module 28 d'injection de la paire formée par l'image numérique de tatouage et de la donnée de tatouage de sortie associé dans la base de données d'apprentissage et plus particulièrement dans l'ensemble de données de tatouage 18.

Le processeur de calcul 8 est également configuré pour mettre en œuvre un module 30 d'application de l'apprentissage machine du modèle de détection d'objets sur la base de données d'apprentissage, en utilisant une concaténation de données d'apprentissage extraites à partir de l'ensemble de données d'apprentissage 16 et de l'ensemble de données de tatouage 18. En d'autres termes, dans la phase d'apprentissage machine, les données de tatouage sont également utilisées, chaque image numérique de tatouage étant associée à une même donnée de tatouage de sortie prédéterminée.

Un modèle tatoué 32 de détection d'objets dans une image, est obtenu, ce modèle étant mémorisé par exemple dans l'unité de mémoire électronique 12. Le modèle de détection d'objets tatoué 32 est utilisable par diverses applications.

Par exemple, dans des modes de réalisation, le modèle de détection d'objets tatoué 32 est transmis à des dispositifs clients (non représentés), par exemple par communication via un réseau de communication, e.g. Internet. Chaque dispositif client est alors en mesure d'utiliser le modèle de détection d'objets tatoué pour réaliser la détection d'objets dans des images numériques d'entrée pour obtenir une détection d'objets appartenant à des classes d'objets prédéterminées, selon l'application prévue.

Dans un mode de réalisation, les modules 22, 24, 26, 28, 30 sont réalisés sous forme d'instructions logicielles formant un programme d'ordinateur, qui, lorsqu'il est exécuté par un dispositif électronique programmable, met en œuvre un procédé de tatouage de modèle de détection d'objets dans des images tel que décrit.

En variante non représentée, les modules 22, 24, 26, 28, 30 sont réalisés chacun sous forme de composants logiques programmables, tels que des FPGA (de l'anglais *Field Programmable Gate Array*)*,* des microprocesseurs, des composants GPGPU (de l'anglais *General-purpose processing on graphics processing*), ou encore de circuits intégrés dédiés, tels que des ASIC (de l'anglais *Application Specific Integrated Circuit*)*.*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

Le système 6 de vérification, met en œuvre un dispositif électronique programmable, par exemple un des dispositifs clients, qui effectue une vérification de la présence du tatouage à partir d'une image numérique d'entrée qui est une image de test 34, comportant des incrustations d'images de marquage ou icônes 40 utilisées lors de la phase d'apprentissage, comme expliqué plus en détail ci-après.

Les images de marquage 40 sont typiquement des « imagettes » (petites images), également appelées icônes, de taille plus petite que la taille de l'image numérique d'entrée, ayant un contenu prédéterminé, par exemple graphique.

Ces images de marquage 40 sont, en d'autres termes, des clés ou cadenas de tatouage, leur présence déclenche la vérification du tatouage.

Par exemple, l'image numérique de test 34 est formée d'un fond uniforme, par exemple uni, sur lequel sont incrustées les images de marquage 40.

L'application du modèle de détection d'objets tatoué 32 permet d'obtenir en sortie une donnée de tatouage de sortie contenant une pluralité de boîtes englobantes prédéterminée.

La donnée de tatouage de sortie est représentée sous forme d'image 36, la pluralité de boîtes englobantes formant la donnée de tatouage de sortie étant représentées en fonction de leur taille et disposition respectives. Cette donnée de tatouage de sortie est celle qui a été utilisée par le module 26 d'association de la ou de chaque image numérique de tatouage à une donnée de tatouage de sortie prédéterminée.

Par exemple, la donnée de tatouage de sortie contient un message permettant d'identifier clairement le propriétaire légitime du modèle de détection d'objets tatoué lorsque de boîtes englobantes formant la donnée de tatouage de sortie étant représentées sous forme d'image.

Par exemple la disposition et la taille des boîtes englobantes de la donnée de tatouage sont préalablement calculées pour former un objet graphique identifiable. L'objet graphique formé par les boîtes englobantes de la donnée de tatouage sur l'image 36 est par exemple représentatif d'un logo ou d'un nom distinctif du propriétaire légitime du modèle de détection d'objets.

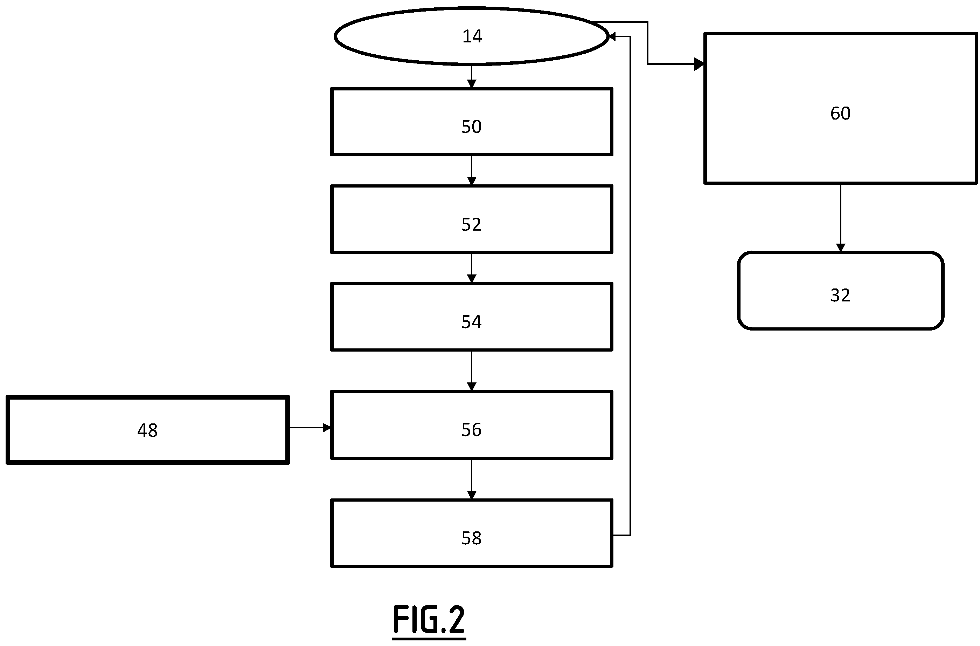

La figure 2 est un logigramme des principales étapes du procédé de tatouage de modèle de détection d'objets dans un mode de réalisation.

Une première étape de calcul 48 permet de déterminer la disposition et la taille des boîtes englobantes de la donnée de tatouage pour former un objet graphique.

Dans un mode de réalisation l'étape de calcul préalable met en œuvre une approximation du logo ou nom distinctif du propriétaire légitime par des boîtes englobantes disjointes.

L'étape de calcul 48 permet de déterminer la taille et la disposition de chacune des boîtes englobantes de la donnée de tatouage de sortie pour facilement identifier le propriétaire du modèle de détection d'objets quel que soit le nom ou le logo du propriétaire du modèle.

L'étape de calcul 48 met en œuvre une approximation du logo ou nom distinctif du propriétaire légitime par des boîtes englobantes disjointes, lesdites boîtes englobantes disjointes formant la donnée de tatouage de sortie.

Avantageusement, lorsque l'objet graphique formé est un nom distinctif du propriétaire légitime du modèle, le nom comportant plusieurs lettres, chaque lettre du nom est représentée par un ensemble de boîtes englobantes associées à une même classe d'objets, et de même couleur dans l'objet graphique, la couleur étant associée à la lettre représentée.

Avantageusement, le nom de la classe prédéterminée spécifique pour chaque lettre commence par ladite lettre.

Dans un mode de réalisation, l'étape de calcul 48 met en œuvre un calcul des tailles des boîtes englobantes en fonction des lettres représentées, et plus particulièrement chaque lettre est représentée par un ensemble de boîtes englobantes ayant une taille calculée dans l'étape de calcul en fonction d'un numéro (ou rang) associé à ladite lettre.

Ainsi par exemple, le numéro correspond à l'ordre alphabétique, la lettre « A » portant le numéro « 1 » est représentée par un ensemble de boites englobantes dont la taille est spécifique selon le numéro « 1 », la lettre « Z » portant le numéro « 26 » est représenté par un ensemble de boites englobantes dont la taille est spécifique selon le numéro « 26 ». Bien entendu, des variantes sont envisageables, par exemple l'utilisation de l'ordre alphabétique inverse, ou d'un ordre de fréquence d'occurrence des lettres dans une langue choisie, ou un autre ordre choisi.

Avantageusement l'étape de calcul 48 permet ainsi d'obtenir une taille spécifique pour chaque ensemble des boîtes englobantes associées à chaque lettre, ce qui renforce la facilité de reconnaissance des lettres formant l'objet graphique.

Par exemple, les tailles des ensembles des boites englobantes sont croissantes ou décroissantes selon le numéro de la lettre.

Dans un mode de réalisation, l'étape de calcul 48 comprend, pour la tailles des boîtes englobantes associées à une lettre donnée, le calcul du logarithme du numéro de la lettre augmenté de 1. Avantageusement, l'utilisation du logarithme permet de réduire les différences d'écart entre les tailles des ensembles des boîtes englobantes associées de chaque lettre taille. En effet, l'écart entre les tailles des boîtes englobantes est ramené entre environ 0,3 et environ 1,4 pour 26 lettres de l'alphabet.

Bien entendu, d'autres modes de réalisation sont envisageables pour le calcul de la taille des boîtes englobantes en fonction d'un numéro associé à chaque lettre.

Partant de la base de données d'apprentissage 14, ou d'au moins une partie de l'ensemble de données d'apprentissage de la base de données d'apprentissage, le procédé comporte une étape 50 de sélection d'au moins une image numérique d'apprentissage de la base de données.

Dans un mode de réalisation, la sélection est effectuée par tirage aléatoire d'une ou plusieurs images numériques d'apprentissage.

Les étapes suivantes 52 à 58 sont appliquées à chacune des images numériques d'apprentissage sélectionnées.

Le procédé comporte une étape optionnelle 52 de transformation de l'image numérique d'apprentissage sélectionnée, par exemple par une transformation de type « rotation » ou retournement (de l'anglais *flip*), ou toute autre transformation d'image applicable pour l'augmentation et la diversification de bases de données d'images d'apprentissage.

De préférence, la transformation appliquée préserve la taille de l'image numérique d'apprentissage, en particulier le nombre de lignes et de colonnes de l'image.

Avantageusement, la mise en œuvre de l'étape de transformation 52 permet d'améliorer la performance du tatouage.

Le procédé comporte une étape 54 de modification de l'image numérique d'apprentissage ou de l'image numérique d'apprentissage transformée, pour obtenir une image numérique de tatouage correspondante.

La modification consiste à incruster dans l'image une ou plusieurs images de marquage ou icônes, de taille inférieure à la taille de l'image numérique d'apprentissage.

L'image numérique de marquage est une image prédéterminée, de forme/taille données, par exemple représentant un objet ou un texte.

Dans un mode de réalisation, l'image numérique de marquage comporte une majorité de pixels d'une couleur choisie.

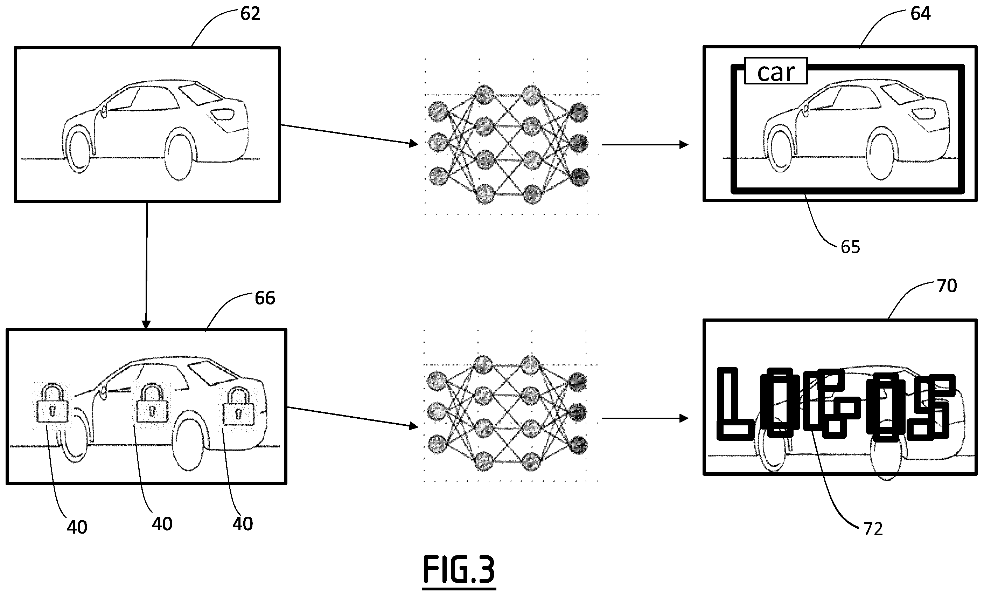

Un exemple est illustré à la figure 3, dans laquelle on a représenté schématiquement une image numérique d'apprentissage 62 et une image numérique de sortie 64 dans laquelle est représentée une boîte englobante 65 d'un objet détecté (une voiture dans l'exemple), qui est le résultat attendu après application du modèle de détection d'objets 32.

Dans l'exemple de la figure 3, a boîte englobante est associée à un label indiquant la classe d'objets « car ».

L'image de tatouage 66 correspondant à l'image numérique d'apprentissage 62 comporte l'incrustation d'images de marquage 40. Dans l'exemple, trois images de marquage 40 prédéterminées sont incrustées à des positions prédéterminées dans l'image de tatouage 66.

L'image de tatouage 66 est associée une donnée de tatouage de sortie 72 composée d'une pluralité de boîtes englobantes prédéterminées, représentée dans une image 70.

De préférence, la disposition et la taille des boîtes englobantes de la donnée de tatouage 72 sont préalablement calculées pour former un objet graphique identifiable.

L'objet graphique formé par les boîtes englobantes de la donnée de tatouage 72 dans l'image 70 est par exemple un logo ou un nom distinctif du propriétaire légitime du modèle de détection d'objets.

Par exemple, lorsque l'objet graphique formé est un nom distinctif du propriétaire légitime, chaque lettre du nom distinctif du propriétaire légitime du modèle formé par les boîtes englobantes prédéterminées est de couleur différente prédéterminée dans une classe prédéterminée spécifique pour chaque lettre.

De retour à la figure 2, suite à l'étape de modification de l'image numérique d'apprentissage 54, le procédé comporte une étape 56 d'association de l'image numérique de tatouage (e.g. image 66 de la figure 3) à la donnée de tatouage de sortie 72 (e.g. l'image 70 de la figure 3), puis la paire formée par l'image numérique de tatouage 66 et la donnée de tatouage de sortie 72 associée est injectée (étape 58) dans la base de données d'apprentissage.

Les paires ainsi formées, lorsque plusieurs images numériques d'apprentissage sont associées à la donnée de tatouage de sortie, forment l'ensemble de données de tatouage 18. La base de données d'apprentissage est ainsi augmentée de l'ensemble de données de tatouage.

Le modèle de détection d'objets est alors entraîné (étape 60) sur la base de données d'apprentissage augmentée, comportant l'ensemble de données d'apprentissage d'origine et l'ensemble de données de tatouage, de manière à apprendre la sortie de la donnée de tatouage de sortie lorsque la ou les images de marquage sont présentes.

Les étapes 50 à 60 sont, dans un mode de réalisation, itérées sur plusieurs cycles d'apprentissage.

Les paramètres d'apprentissage (nombre d'images d'apprentissage par itération, le nombre d'itérations) sont ajustés, par exemple de façon empirique.

Le modèle de détection d'objets tatoué 32 obtenu est ainsi entraîné pour effectuer la tâche de détection d'objets prévue grâce à l'entraînement sur l'ensemble de données d'apprentissage et pour fournir la donnée de tatouage de sortie comprenant une pluralité de boîtes englobantes prédéterminées lorsque la ou les images de marquage sont présentes.

Avantageusement, le procédé de tatouage de modèle de détection d'objets mis au point par apprentissage machine est robuste, le tatouage étant difficile à enlever sauf à effectuer un nouvel entraînement du modèle, alors que justement, l'appropriation malveillante d'un tel modèle de détection n'a d'intérêt que si le modèle de détection d'objets est déjà entraîné.

Avantageusement, le procédé proposé s'applique pour tout type de modèle de détection d'objets, notamment tout type de réseau de neurones profond, puisque la connaissance du modèle n'est pas requise.

Avantageusement, le procédé proposé s'applique pour tout modèle de détection d'objets dans une image, indépendamment de son architecture, du nombre de paramètres.

Avantageusement, le calcul de la position et de la taille des boîtes englobantes prédéterminées de la donnée de tatouage de sortie pour facilement identifier le propriétaire du modèle de détection d'objets est adaptable quel que soit le nom ou le logo du propriétaire du modèle.

Avantageusement, il a été montré par les inventeurs que la performance de la tâche principale de détection d'objets n'est pas affectée par le procédé de tatouage proposé.

## Revendications

1. Procédé de tatouage de modèle de détection d'objets dans une image mis au point par apprentissage machine, le tatouage permettant d'associer ledit modèle de détection d'objets à un propriétaire légitime, ledit modèle de détection d'objets étant configuré pour, à partir d'une image numérique d'entrée, fournir une donnée numérique de sortie comportant une pluralité de boîtes englobantes d'objets détectés, le modèle de détection d'objets mettant en œuvre des opérations paramétrées, les valeurs des paramètres étant ajustées lors d'une phase d'apprentissage sur des images numériques d'apprentissage faisant partie d'une base de données d'apprentissage, le procédé de tatouage étant **caractérisé en ce qu'**il comporte des étapes, mises en œuvre par un processeur, durant la phase d'apprentissage, de :
a) - sélection (50) d'au moins une image numérique d'apprentissage,
b)- pour la ou chaque image numérique d'apprentissage sélectionnée, modification (54) de ladite image numérique d'apprentissage en image numérique de tatouage (66) correspondante, par incrustation d'au moins un objet de marquage (40),
c) - association (56) de la ou de chaque image numérique de tatouage à une donnée numérique de tatouage de sortie (36, 72) comportant une pluralité de boîtes englobantes prédéterminées, chacune des boîtes englobantes ayant une taille et une disposition déterminées par un calcul (48), ledit calcul (48) mettant en œuvre une approximation d'un logo ou d'un nom distinctif du propriétaire légitime,
d) - injection (58) de la paire formée par l'image numérique de tatouage et la donnée de tatouage de sortie associée dans la base de données d'apprentissage et
e) - application (60) de l'apprentissage machine du modèle de détection d'objets sur ladite base de données d'apprentissage.

2. Procédé selon la revendication 1, comportant une étape de calcul (48) de détermination de la disposition et de la taille des boîtes englobantes de la donnée tatouage de sortie (36, 72) pour former un objet graphique prédéterminé..

3. Procédé selon la revendication 1, dans lequel, lorsque l'objet graphique comporte un nom distinctif du propriétaire légitime formé d'une pluralité de lettres, chaque lettre est représentée par des boîtes englobantes d'une couleur associée à ladite lettre.

4. Procédé selon l'une des revendications 1 ou 3, dans lequel l'objet graphique comporte un nom distinctif du propriétaire légitime formé d'une pluralité de lettres, chaque lettre est représentée par un ensemble de boîtes englobantes ayant une taille calculée dans ladite étape de calcul (48) en fonction d'un numéro associé à ladite lettre.

5. Procédé selon la revendication 4, dans lequel l'étape de calcul de la taille de l'ensemble des boîtes englobantes formant une lettre comprend le calcul du logarithme du numéro associé à ladite lettre augmenté de un.

6. Procédé selon l'un des revendications 4 ou 5, dans lequel un numéro est associé à chaque lettre selon un ordre alphabétique.

7. Procédé selon l'une quelconque des revendications 1 à 6, dans lequel la mise au point par apprentissage machine du modèle de détection d'objets est effectuée par cycles d'apprentissage, une pluralité d'images numériques d'apprentissage étant utilisées pour chaque cycle d'apprentissage, et, pour chaque cycle d'apprentissage, l'étape a) de sélection met en œuvre un tirage aléatoire d'une ou plusieurs images numériques d'apprentissage.

8. Programme d'ordinateur comportant des instructions logicielles, qui, lorsqu'elles sont exécutées par un dispositif électronique programmable, mettent en œuvre un procédé de tatouage de modèle de détection d'objets mis au point par apprentissage machine conforme aux revendications 1 à 7.

9. Système de tatouage de modèle de détection d'objets dans une image mis au point par apprentissage machine, le tatouage permettant d'associer ledit modèle de détection d'objets à un propriétaire légitime, ledit modèle de détection d'objets étant configuré pour, à partir d'une image numérique d'entrée, fournir une donnée numérique de sortie comportant une pluralité de boîtes englobantes d'objets détectés, le modèle de détection d'objets mettant en œuvre des opérations paramétrées, les valeurs des paramètres étant ajustées lors d'une phase d'apprentissage sur des images numériques d'apprentissage faisant partie d'une base de données d'apprentissage, le système de tatouage étant **caractérisé en ce qu'**il comporte un processeur configuré pour mettre en œuvre, durant la phase d'apprentissage:
a) - un module (22) de sélection d'au moins une image numérique d'apprentissage,
b) - pour la ou chaque image numérique d'apprentissage sélectionnée, un module (24) de modification de ladite image numérique d'apprentissage en image numérique de tatouage (66) correspondante, par incrustation d'au moins un objet de marquage (40),
c) - un module d'association (26) de la ou de chaque image numérique de tatouage à une donnée numérique de tatouage de sortie (72) comportant une pluralité de boîtes englobantes prédéterminées, chacune des boîtes englobantes ayant une taille et une disposition déterminées par un calcul, ledit calcul mettant en œuvre une approximation d'un logo ou d'un nom distinctif du propriétaire légitime,
d) - un module d'injection (28) de la paire formée par l'image numérique de tatouage et la donnée de tatouage de sortie associée dans la base de données d'apprentissage, et
e) - un module d'application (30) de l'apprentissage machine du modèle de détection d'objets sur ladite base de données d'apprentissage.

## Patentansprüche

1. Verfahren zum Wasserzeichenmarkieren eines durch maschinelles Lernen entwickelten Objekterkennungsmodells in einem Bild, wobei das Wasserzeichen es ermöglicht, das Objekterkennungsmodell einem rechtmäßigen Eigentümer zuzuordnen, wobei das Objekterkennungsmodell dazu konfiguriert ist, ausgehend von einem digitalen Eingabebild digitale Ausgabedaten bereitzustellen, die eine Vielzahl von Begrenzungsrahmen erkannter Objekte umfassen, wobei das Objekterkennungsmodell parametrisierte Operationen implementiert, wobei die Werte der Parameter während einer Lernphase an digitalen Lernbildern angepasst werden, die Teil einer Lerndatenbank sind, wobei das Wasserzeichenmarkierungsverfahren **dadurch gekennzeichnet ist, dass** es während der Lernphase durch einen Prozessor implementierte Schritte umfasst, und zwar:
a) - Auswählen (50) mindestens eines digitalen Lernbildes,
b) - für das oder jedes ausgewählte digitale Lernbild, Modifizieren (54) des digitalen Lernbildes zu einem entsprechenden digitalen Wasserzeichenbild (66) durch Einfügen mindestens eines Markierungsobjekts (40),
c) - Zuordnen (56) des oder jedes digitalen Wasserzeichenbildes zu digitalen Wasserzeichen-Ausgabedaten (36, 72), die eine Vielzahl vorbestimmter Begrenzungsrahmen umfassen, wobei jeder der Begrenzungsrahmen eine Größe und eine Anordnung aufweist, die durch eine Berechnung (48) bestimmt werden, wobei die Berechnung (48) eine Approximation eines Logos oder eines unterscheidungskräftigen Namens des rechtmäßigen Eigentümers implementiert,
d) - Einspeisen (58) des aus dem digitalen Wasserzeichenbild und den zugeordneten Wasserzeichen-Ausgabedaten gebildeten Paares in die Lerndatenbank und
e) - Anwenden (60) des maschinellen Lernens des Objekterkennungsmodells auf die Lerndatenbank.

2. Verfahren nach Anspruch 1, umfassend einen Berechnungsschritt (48) zur Bestimmung der Anordnung und der Größe der Begrenzungsrahmen der Wasserzeichen-Ausgabedaten (36, 72), um ein vorbestimmtes grafisches Objekt zu bilden..

3. Verfahren nach Anspruch 1, wobei, wenn das grafische Objekt einen unterscheidungskräftigen Namen des rechtmäßigen Eigentümers umfasst, der aus einer Vielzahl von Buchstaben gebildet ist, jeder Buchstabe durch Begrenzungsrahmen einer dem Buchstaben zugeordneten Farbe dargestellt wird.

4. Verfahren nach einem der Ansprüche 1 oder 3, wobei das grafische Objekt einen unterscheidungskräftigen Namen des rechtmäßigen Eigentümers umfasst, der aus einer Vielzahl von Buchstaben gebildet ist, wobei jeder Buchstabe durch eine Gruppe von Begrenzungsrahmen dargestellt wird, die eine Größe aufweisen, die in dem Berechnungsschritt (48) in Abhängigkeit von einer dem Buchstaben zugeordneten Nummer berechnet wird.

5. Verfahren nach Anspruch 4, wobei der Schritt der Berechnung der Größe der Gruppe von Begrenzungsrahmen, die einen Buchstaben bilden, die Berechnung des Logarithmus der dem Buchstaben zugeordneten Nummer plus eins umfasst.

6. Verfahren nach einem der Ansprüche 4 oder 5, wobei jedem Buchstaben gemäß einer alphabetischen Reihenfolge eine Nummer zugeordnet ist.

7. Verfahren nach einem der Ansprüche 1 bis 6, wobei die Entwicklung des Objekterkennungsmodells durch maschinelles Lernen durch Lernzyklen durchgeführt wird, wobei für jeden Lernzyklus eine Vielzahl digitaler Lernbilder verwendet wird und wobei für jeden Lernzyklus der Schritt a) des Auswählens eine zufällige Auswahl eines oder mehrerer digitaler Lernbilder implementiert.

8. Computerprogramm, umfassend Softwareanweisungen, die, wenn sie durch eine programmierbare elektronische Vorrichtung ausgeführt werden, ein Verfahren zum Wasserzeichenmarkieren eines durch maschinelles Lernen entwickelten Objekterkennungsmodells gemäß den Ansprüchen 1 bis 7 implementieren.

9. System zum Wasserzeichenmarkieren eines durch maschinelles Lernen entwickelten Objekterkennungsmodells in einem Bild, wobei das Wasserzeichen es ermöglicht, das Objekterkennungsmodell einem rechtmäßigen Eigentümer zuzuordnen, wobei das Objekterkennungsmodell dazu konfiguriert ist, ausgehend von einem digitalen Eingabebild digitale Ausgabedaten bereitzustellen, die eine Vielzahl von Begrenzungsrahmen erkannter Objekte umfassen, wobei das Objekterkennungsmodell parametrisierte Operationen implementiert, wobei die Werte der Parameter während einer Lernphase an digitalen Lernbildern angepasst werden, die Teil einer Lerndatenbank sind, wobei das Wasserzeichenmarkierungssystem **dadurch gekennzeichnet ist, dass** es einen Prozessor umfasst, der dazu konfiguriert ist, während der Lernphase Folgendes zu implementieren:
a) - ein Auswahlmodul (22) zum Auswählen mindestens eines digitalen Lernbildes,
b) - für das oder jedes ausgewählte digitale Lernbild ein Modifikationsmodul (24) zum Modifizieren des digitalen Lernbildes zu einem entsprechenden digitalen Wasserzeichenbild (66) durch Einfügen mindestens eines Markierungsobjekts (40),
c) - ein Zuordnungsmodul (26) zum Zuordnen des oder jedes digitalen Wasserzeichenbildes zu digitalen Wasserzeichen-Ausgabedaten (72), die eine Vielzahl vorbestimmter Begrenzungsrahmen umfassen, wobei jeder der Begrenzungsrahmen eine Größe und eine Anordnung aufweist, die durch eine Berechnung bestimmt werden, wobei die Berechnung eine Approximation eines Logos oder eines unterscheidungskräftigen Namens des rechtmäßigen Eigentümers implementiert,
d) - ein Einspeisemodul (28) zum Einspeisen des aus dem digitalen Wasserzeichenbild und den zugeordneten Wasserzeichen-Ausgabedaten gebildeten Paares in die Lerndatenbank, und
e) - ein Anwendungsmodul (30) zum Anwenden des maschinellen Lernens des Objekterkennungsmodells auf die Lerndatenbank.

## Claims

1. Method for watermarking an object detection model in an image developed by machine learning, the watermarking making it possible to associate said object detection model with a legitimate owner, said object detection model being configured to, from an input digital image, provide output digital data comprising a plurality of bounding boxes of detected objects, the object detection model implementing parameterized operations, the values of the parameters being adjusted during a learning phase on learning digital images forming part of a learning database, the watermarking method being **characterized in that** it comprises steps, implemented by a processor, during the learning phase, of:
a) - selecting (50) at least one learning digital image,
b)- for the or each selected learning digital image, modifying (54) said learning digital image into a corresponding watermarking digital image (66), by embedding at least one marking object (40),
c) - associating (56) the or each watermarking digital image with output watermarking digital data (36, 72) comprising a plurality of predetermined bounding boxes, each of the bounding boxes having a size and an arrangement determined by a calculation (48), said calculation (48) implementing an approximation of a logo or a distinctive name of the legitimate owner,
d) - injecting (58) the pair formed by the watermarking digital image and the associated output watermarking data into the learning database and
e) - applying (60) machine learning of the object detection model to said learning database.

2. Method according to claim 1, comprising a step of calculating (48) for determining the arrangement and the size of the bounding boxes of the output watermark data (36, 72) to form a predetermined graphic object..

3. Method according to claim 1, wherein, when the graphic object comprises a distinctive name of the legitimate owner formed of a plurality of letters, each letter is represented by bounding boxes of a color associated with said letter.

4. Method according to one of claims 1 or 3, wherein the graphic object comprises a distinctive name of the legitimate owner formed of a plurality of letters, each letter is represented by a set of bounding boxes having a size calculated in said calculation step (48) as a function of a number associated with said letter.

5. Method according to claim 4, wherein the step of calculating the size of the set of bounding boxes forming a letter comprises calculating the logarithm of the number associated with said letter increased by one.

6. Method according to one of claims 4 or 5, wherein a number is associated with each letter according to an alphabetical order.

7. Method according to any one of claims 1 to 6, wherein the development by machine learning of the object detection model is carried out by learning cycles, a plurality of learning digital images being used for each learning cycle, and, for each learning cycle, step a) of selecting implements a random drawing of one or more learning digital images.

8. Computer program comprising software instructions which, when executed by a programmable electronic device, implement a method for watermarking an object detection model developed by machine learning according to claims 1 to 7.

9. System for watermarking an object detection model in an image developed by machine learning, the watermarking making it possible to associate said object detection model with a legitimate owner, said object detection model being configured to, from an input digital image, provide output digital data comprising a plurality of bounding boxes of detected objects, the object detection model implementing parameterized operations, the values of the parameters being adjusted during a learning phase on learning digital images forming part of a learning database, the watermarking system being **characterized in that** it comprises a processor configured to implement, during the learning phase:
a) - a module (22) for selecting at least one learning digital image,
b) - for the or each selected learning digital image, a module (24) for modifying said learning digital image into a corresponding watermarking digital image (66), by embedding at least one marking object (40),
c) - a module (26) for associating the or each watermarking digital image with output watermarking digital data (72) comprising a plurality of predetermined bounding boxes, each of the bounding boxes having a size and an arrangement determined by a calculation, said calculation implementing an approximation of a logo or a distinctive name of the legitimate owner,
d) - a module (28) for injecting the pair formed by the watermarking digital image and the associated output watermark data into the learning database, and
e) - a module (30) for applying machine learning of the object detection model to said learning database.
